# EUROPÄISCHE PATENTSCHRIFT

(11) **EP 3 245 429 B1**
(45) Veröffentlichungstag und Bekanntmachung des Hinweises auf die Patenterteilung: **30.10.2019**
(21) Anmeldenummer: 16701428.1
(22) Anmeldetag: 15.01.2016
(51) Int. Cl.: F16J 15/3208, F16J 15/3284, F16J 15/56, F16J 15/00, F16J 15/16, F16J 15/3236

(54) **DICHTUNGSSYSTEM MIT DRUCKENTLASTUNGSELEMENTEN UND VERWENDUNG EINES DICHTUNGSSYSTEMS ZUR EINSTELLUNG EINER ZWISCHENRAUMDRUCKKASKADE**
SEALING SYSTEM WITH PRESSURE RELIEF ELEMENTS AND USE OF A SEALING SYSTEM FOR PRODUCING A PRESSURE CASCADE IN AN INTERMEDIATE SPACE
SYSTÈME D'ÉTANCHÉITÉ DOTÉ D'ÉLÉMENT DE DÉCHARGE DE PRESSION ET UTILISATION D'UN SYSTÈME D'ÉTANCHÉITÉ DESTINÉ À L'ÉTABLISSEMENT D'UNE CASCADE EN PRESSION D'ESPACE INTERMÉDIAIRE

(30) Priorität: 16.01.2015 EP 15151542
(43) Veröffentlichungstag der Anmeldung: 22.11.2017
(73) Patentinhaber: Trelleborg Sealing Solutions Germany GmbH, 70565 Stuttgart (DE)
(72) Erfinder: JORDAN, Holger, 73765 Neuhausen a.d.F. (DE)
(74) Vertreter: Kohler Schmid Möbus Patentanwälte
(86) Internationale Anmeldenummer: PCT/EP2016/050820
(87) Internationale Veröffentlichungsnummer: WO 2016/113414

(56) Entgegenhaltungen:
- EP-A1- 0 052 689
- EP-B1- 1 991 800
- US-B1- 6 290 235

## Beschreibung

Die Erfindung betrifft ein Dichtungssystem zwischen zwei entlang einer Bewegungsachse gegeneinander translatorisch beweglichen Bauteilen zum Abdichten einer Hochdruckseite gegenüber einer Niederdruckseite, wobei ein äußeres Bauteil eine zu einem inneren Bauteil offene, der Niederdruckseite (N) zugewandte erste Ringnut und zumindest eine zum inneren Bauteil offene, der Hochdruckseite zugewandte zweite Ringnut aufweist. In der ersten Ringnut ist eine Dichtungsanordnung vorgesehen, die einen am inneren Bauteil anliegenden ersten Dichtring aus einem elastisch verformbaren Material und einen den ersten Dichtring radial spannenden, gegenüber der ersten Ringnut abdichtenden ersten Vorspannring aus einem elastisch verformbaren Material aufweist. In jeder zweiten Ringnut ist ein Druckentlastungselement vorgesehen, das einen am inneren Bauteil anliegenden zweiten Dichtring aus einem elastisch verformbaren Material und einen den zweiten Dichtring radial spannenden, gegenüber der zweiten Ringnut abdichtenden zweiten Vorspannring aus einem elastisch verformbaren Material aufweist.

Der zweite Dichtring weist eine Dichtkante mit einem hochdruckseitigen Kontaktflächenwinkel und einem niederdruckseitigen Kontaktflächenwinkel auf, wobei jedem Druckentlastungselement mindestens ein Verbindungskanal zugeordnet ist, über den ein Zwischenraum zwischen der Dichtungsanordnung und dem ersten Druckentlastungselement mit der Hochdruckseite oder ein Zwischenraum zwischen zwei benachbarten Druckentlastungselementen mit der Hochdruckseite verbindbar ist oder zwei benachbarte Zwischenräume über den Verbindungskanal miteinander verbindbar sind.

Jeder Verbindungskanal ist in einer Drucklage P_{ZN} > P_{H} bzw. P_{ZN} > P_{ZH} geschlossen und in einer Druckentlastungslage P_{ZN} ≥ P_{H}+Pₖᵣᵢₜ bzw. P_{ZN} ≥ P_{ZH}+Pₖᵣᵢₜ geöffnet, wobei P_{H} der hydraulische Druck auf der Hochdruckseite, P_{ZN} der hydraulische Druck im niederdruckseitigen Zwischenraum, P_{ZH} der hydraulische Druck im hochdruckseitigen Zwischenraum und Pₖᵣᵢₜ eine Druckzuwachsgröße ist, bei der oder bei deren Überschreitung der Verbindungskanal geöffnet ist und wobei P_{Krit} durch eine Verformung des zweiten Vorspannrings definiert ist. Der Verbindungskanal ist in der Drucklage P_{ZN} > P_{H} bzw. P_{ZN} > P_{ZH} durch den zweiten Vorspannring verschlossen und der hochdruckseitige Kontaktflächenwinkel der Dichtkante des zweiten Dichtrings ist kleiner oder gleich dem niederdruckseitigen Kontaktflächenwinkel der Dichtkante, so dass im druckbeaufschlagten Zustand und bei einer Hin- und Herbewegung des inneren Bauteils im äußeren Bauteil für den Dichtring eine bestimmte Leckagerate eingestellt ist, über die der hydraulische Druck im niederdruckseitigen Zwischenraum eingestellt wird.

Ein derartiges Dichtungssystem ist aus der EP 1 991 800 B1 bekannt. Das bekannte Dichtungssystem ist jedoch mit einem hohen Montageaufwand verbunden und in der Herstellung teuer.

Es ist deshalb die Aufgabe der Erfindung, ein Dichtungssystem mit den vorgenannten technischen Vorteilen anzugeben, das insgesamt einfacher und kostengünstiger herzustellen ist.

Die erfindungsgemäße Aufgabe wird durch ein Dichtungssystem mit den in Patentanspruch 1 angegebenen Merkmalen gelöst.

Bei dem erfindungsgemäßen Dichtungssystem sind der zweite Dichtring und der zweite Vorspannring der beiden Druckentlastungselemente jeweils einstückig miteinander ausgebildet und bestehen aus Polyurethan, wobei P_{Krit} durch eine zumindest abschnittsweise Verformung des zweiten Vorspannrings in einer zur Bewegungsachse radialen Richtung definiert ist. Der zweite Dichtring und das zweite Vorspannelement können dadurch gemeinsam als ein einzelnes Bauteil aus einem kostengünstigen Werkstoff sowie mit insgesamt geringeren Fertigungstoleranzen erzeugt werden. Darüber hinaus wird dadurch die Montage des Dichtungssystems vereinfacht. Das erfindungsgemäße Dichtungssystem kann dadurch insgesamt einfacher und kostengünstiger hergestellt werden.

Bei dem erfindungsgemäßen Dichtungssystem liegt der Druck auf der Hochdruckseite nicht unmittelbar an der Primärdichtung an. Dieser Vorteil wirkt sich besonders bei der Anordnung mehrerer hintereinandergeschalteter Druckentlastungselemente aus. Beim Aufbau eines Dichtungssystems mit einer Dichtungsanordnung und einem oder mehreren Druckentlastungselementen sind ein oder mehrere Zwischenräume zwischen dem oder den Druckentlastungselementen und der Dichtungsanordnung vorgesehen. Im hydraulischen Betrieb können in den einzelnen, durch Druckentlastungselemente voneinander getrennten, Zwischenräumen unterschiedliche hydraulische Drücke entstehen. Die Druckdifferenz zwischen benachbarten Zwischenräumen bestimmt den Druck, mit dem das entsprechende Druckentlastungselement belastet wird. Jedem Druckentlastungselement ist mindestens ein Verbindungskanal zur Druckentlastung des auf der Niederdruckseite angrenzenden niederdruckseitigen Zwischenraums zugeordnet. Jeder Verbindungskanal verbindet den niederdruckseitigen Zwischenraum, in dem der hydraulische Druck P_{ZN} anliegt, mit dem der Hochdruckseite zugewandten, hochdruckseitigen Zwischenraum, in dem der hydraulische Druck P_{ZH} anliegt, bzw. mit der den Hochdruck P_{H} aufweisenden Hochdruckseite. Der Verbindungskanal ist in einer Grunddrucklage P_{ZN} ≤ P_{ZH} bzw. P_{ZN} ≤ P_{H} des Dichtungssystems, in der der Druck P_{ZN} im niederdruckseitigen Zwischenraum kleiner oder gleich dem Druck P_{ZH} im hochdruckseitigen Zwischenraum bzw. dem Druck P_{H} auf der Hochdruckseite ist, geschlossen. In der Grunddrucklage dichtet der Dichtring den hochdruckseitigen Zwischenraum bzw. die Hochdruckseite gegenüber dem niederdruckseitigen Zwischenraum ab. Der erfindungsgemäße Verbindungskanal bleibt auch in einer invertierten Drucklage P_{ZN} > P_{ZH} bzw. P_{ZN} > P_{H} geschlossen, in der der niederdruckseitige Zwischenraumdruck den hochdruckseitigen Druck übersteigt und in der der Dichtring den niederdruckseitigen Zwischenraum gegenüber dem hochdruckseitigen Zwischenraum bzw. gegenüber der Hochdruckseite abdichtet. Der Verbindungskanal wird erst beim Erreichen einer Druckentlastungslage P_{ZN} ≥ P_{ZH}+Pₖᵣᵢₜ bzw. P_{ZN} ≥ P_{H}+Pₖᵣᵢₜ geöffnet, in der eine Druckzuwachsgröße Pₖᵣᵢₜ erreicht oder überschritten wird. Die Druckzuwachsgröße Pₖᵣᵢₜ stellt einen kritischen Öffnungsdruck für den Verbindungskanal dar und ist durch eine Verformung des zweiten Vorspannrings definiert.

Die Druckentlastung durch die einseitig wirkenden Verbindungskanäle ist besonders vorteilhaft bei der Aneinanderreihung mehrerer Druckentlastungselemente. Im hydraulischen Betrieb kann der hydraulische Druck in den Zwischenräumen unterschiedlich stark ansteigen. Die Druckentlastung eines Zwischenraums hängt ausschließlich von dem Druck eines weiteren, nämlich des hochdruckseitig nächsten, Zwischenraums ab. Sobald die Druckdifferenz P_{ZN} - P_{ZH} zwischen beiden an das Druckentlastungselement angrenzenden Zwischenräumen bzw. P_{ZN} - P_{H} zwischen dem Zwischenraum und der Hochdruckseite die jeweilige Druckzuwachsgröße Pₖᵣᵢₜ erreicht, P_{ZN} - P_{ZH} = Pₖᵣᵢₜ bzw. P_{ZN} - P_{H} = Pₖᵣᵢₜ, wird der entsprechende Verbindungskanal geöffnet, so dass ein Druckausgleich zwischen den miteinander verbundenen Druckbereichen bzw. Zwischenräumen stattfindet. Auf diese Weise wird erreicht, dass in dem erfindungsgemäßen Dichtungssystem ein Zwischenraum bei sämtlichen Drücken P_{ZN} - P_{ZH} ≥ Pₖᵣᵢₜ, insbesondere bei Zwischenraumdrücken P_{ZN}, P_{ZH} < P_{H} unterhalb des auf der Hochdruckseite anstehenden hydraulischen Betriebsdruckes, druckentlastet wird. Der hochdruckseitige Kontaktflächenwinkel der Dichtkante des zweiten Dichtrings ist jeweils kleiner oder gleich dem niederdruckseitigen Kontaktflächenwinkel der Dichtkante, so dass im druckbeaufschlagten Zustand und bei einer Hin- und Herbewegung des inneren Bauteils im äußeren Bauteil für den Dichtring eine bestimmte Leckagerate eingestellt ist, über die der hydraulische Druck im niederdruckseitigen Zwischenraum eingestellt wird.

Für den Dichtmechanismus sind die Vorspannung und der Kontaktpressungsverlauf der dynamischen Abdichtung von grundsätzlicher Bedeutung. Die Vorspannung wird beim Einbau des inneren Bauteils in das äußere Bauteil erzeugt. Der Kontaktpressungsverlauf entspricht der von einer druckflüssigkeitsbelasteten Oberfläche des Dichtrings auf die Dichtfläche übertragenen Spannung. Die Bilanz von ausgeschlepptem Ölfilm zu eingeschlepptem Schmierfilm bildet die Leckagerate. Die hydrodynamische Leckagerate wird durch den Pressungsgradienten im Kontaktbereich hin zur Hochdruckseite festgelegt. Der Pressungsgradient hängt von den Kontaktflächenwinkeln zwischen der Dichtkante und dem abzudichtenden inneren Bauteil ab. Ein hochdruckseitig steiler Kontaktflächenwinkel bewirkt einen steilen Pressungsgradient und eine geringe Leckagerate, wohingegen ein hochdruckseitiger flacher Kontaktflächenwinkel zu einem flachen Pressungsgradienten und einer größeren Leckagerate führt.

Solange die Rückförderfähigkeit eines Dichtungssystems größer oder gleich der ausgeförderten Ölmenge ist, spricht man von dichten Systemen. Deshalb weist der erste Dichtring der in der ersten Ringnut angeordneten Dichtungsanordnung, die als Primärdichtung im erfindungsgemäßen Dichtungssystem dient, einen steilen Pressungsgradienten auf. An den Druckentlastungselementen werden demgegenüber Leckraten in kontrollierter Weise zugelassen, indem die Dichtkanten der entsprechenden Dichtringe symmetrische Kontaktflächenwinkel oder asymmetrische Kontaktflächenwinkel mit hochdruckseitig kleinerem Kontaktflächenwinkel als niederdruckseitig aufweisen und infolgedessen flache Pressungsgradienten besitzen. Darüber sind die Dichtkanten abgerundet. Dies bietet fertigungstechnische Vorteile und ermöglicht eine nochmals weiter verbesserte Standzeit des Dichtungssystems. Über die Verrundung der Dichtkante kann der sogenannte Schleppwinkel zwischen Dichtring und bewegtem Bauteil zur Bereitstellung einer bestimmten Leckrate im druckbeaufschlagten Zustand verändert und an die Systemanforderungen angepasst werden. Zur radial innenseitigen Abstützung eines jeweiligen zweiten Dichtrings ist erfindungsgemäß ein Stützring vorgesehen. Der Stützring ist dabei vorzugsweise derart ausgebildet, dass bei einer Druckbeaufschlagung des zweiten Dichtrings bzw. des betreffenden Druckentlastungselements zugleich einer unerwünschten Extrusion des zweiten Dichtrings in den niederdruckseitigen Zwischenraum, d.h. den niederdruckseitigen Dichtspalt zwischen dem inneren und dem äußeren Bauteil, entgegengewirkt ist. Der Stützring kann im Hinblick auf eine geringe Reibung zwischen dem inneren und dem äußeren Bauteil mit einem radialen Abstand - d.h. kontaktfrei - zum inneren Bauteil angeordnet sein. Es versteht sich, dass der Stützring auch an dem inneren Bauteil bzw. dem hin- und herbewegten Bauteil anliegen kann. Insbesondere für den letztgenannten Fall weist der Stützring vorteilhaft eine dem zweiten Bauteil zugewandte Innenseite mit einem Radius auf. Die Innenseite des Stützrings wölbt sich mithin radial in Richtung des inneren Bauteils vor, ist also konvex ausgeführt. Insgesamt kann dadurch auch bei einem zumindest im druckbeaufschlagten Betriebszustand des Dichtungssystems am inneren Bauteil anliegenden Stützring ein zuverlässiges Schleppverhalten, mithin eine optimierte Schmierung des Dichtungssystems, gewährleistet werden.

Die hochdruckseitigen und niederdruckseitigen Kontaktflächenwinkel sind derart gewählt, dass im druckbeaufschlagten Zustand und bei einer Hin- und Herbewegung des inneren Bauteils im äußeren Bauteil eine für jeden Dichtring jeweils bestimmte Leckagerate eingestellt wird, über die der hydraulische Druck in dem an das jeweilige Druckentlastungselement niederdruckseitig angrenzenden Zwischenraum eingestellt wird. Über die Kontaktflächenwinkel ist die hydrodynamische Leckage für jedes Druckentlastungselement derart gewählt, dass in jedem Zwischenraum ein bestimmter hydraulischer Druck anliegt. Auf diese Weise werden im erfindungsgemäßen Dichtungssystem definierte Zwischenraumdrücke eingestellt, die in bevorzugter Ausführung kaskadenartig von der Hochdruckseite zur Niederdruckseite hin abnehmen. An jedem Druckentlastungselement und an der Dichtungsanordnung ist eine Druckstufe definiert, deren Höhe der an dem entsprechenden Element anliegenden Druckdifferenz entspricht. Das erfindungsgemäße Dichtungssystem besitzt neben dem hydrodynamischen Rückfördervermögen der Dichtringe eine hydrostatische Entspannungs-möglichkeit über die in den Druckentlastungselementen vorgesehenen Verbindungskanäle. Die Ventilfunktion der Verbindungskanäle führt zu einer Druckentlastung eines Zwischenraums bei einem Anstieg des Zwischenraumdrucks über den Zwischenraumdruck des hochdruckseitig nächsten Zwischenraums plus die entsprechende Druckzuwachsgröße.

Bei optimaler Auslegung der einzelnen Elemente des erfindungsgemäßen Dichtungssystems kann der System- oder Arbeitsdruck in einem Hydrauliksystem ohne Einschränkungen auf die Funktionalität oder Lebensdauer des Dichtungssystems erhöht werden. Durch einen definierten Druck hinter einem Druckentlastungselement kann sogar die Schmierfilmbildung im Dichtspalt der Druckdichtung verbessert werden, was wiederum die Reibung und die Lebensdauer des Gesamtsystems positiv beeinflusst. Erreicht wird dieser optimierte Zustand durch eine Einstellbarkeit des Öffnungsdruckes der Druckventilation im Druckentlastungselement, das heißt, der entsprechenden Druckzuwachsgröße. Die niederdruckseitige Mündungsöffnung bzw. das niederdruckseitige Ende des Verbindungskanals wird am Innen- oder Außendurchmesser des zweiten Dichtrings oder des zweiten Vorspannrings oder in der zweiten Ringnut axial unterschiedlich angebracht, so dass durch die druckabhängige Verschiebung der Druckentlastungselemente untereinander ein mehr oder weniger hoher Öffnungsdruck eingestellt wird.

Durch das Zusammenspiel von hydrodynamischem Fördervermögen und hydrostatischer Entlastung kann auch unter ungünstigen Betriebsverhältnissen mit einem Dichtungssystem aus beispielsweise einer Druckdichtung mit Entlastungskanal und einer nachgeschalteten Sekundärdichtung eine hohe Standzeit mit verbesserten bzw. ohne Leckagen nach Außen erreicht werden.

Nach einer besonders bevorzugten Weiterbildung der Erfindung sind auch der erste Dichtring und der erste Vorspannring der Dichtungsanordnung des Dichtungssystems einstückig miteinander ausgebildet. Dadurch kann der Fertigungsaufwand des Dichtungssystems nochmals weiter verringert werden. Die Dichtungsanordnung kann in diesem Fall unter Kostengesichtspunkten ebenfalls aus Polyurethan bestehen.

Der zweite Vorspannring des Druckentlastungselements weist nach der Erfindung vorzugsweise einen dichtlippenartig ausgebildeten Schenkel auf, der in der Grunddrucklage P_{ZN} > P_{H} bzw. P_{ZN} > P_{ZH} mit einer Dichtkante am Nutgrund der zweiten Ringnut dichtend anliegt und wobei der dichtlippenartige Schenkel in der Druckentlastungslage - durch seine radial gerichtete Auslenkung gegenüber dem Dichtring - mit seiner Dichtkante aus der dichtenden Anlage am Nutgrund bewegt ist. Dadurch gibt der zweite Vorspannring einen dem Druckausgleich dienenden Fluidstrom über den Verbindungskanal frei. Der zweite Vorspannring kann dabei insbesondere einen gewinkelten bzw. L-förmigen Querschnitt mit einem ersten und einem zweiten Schenkel aufweisen. Der erste Schenkel erstreckt ich dabei vom zweiten Dichtring in radialer Richtung weg und der dichtlippenartig ausgebildete zweite Schenkel erstreckt sich axial in Richtung auf den Hochdruckbereich des Dichtungssystems.

Erfindungsgemäß kann zumindest einer der Verbindungskanäle eine im Druckentlastungselement angeordnete Durchgangsbohrung und/oder zur zweiten Ringnut hin offene Nutabschnitte umfassen, die am Druckentlastungselement und/oder im äußeren Bauteil ausgebildet sind.

Sofern die Durchgangsbohrung bzw. die Nutabschnitte am Druckentlastungselement ausgebildet sind, kann das erfindungsgemäße Dichtungssystem vereinfacht und ohne großen Kostenaufwand bei bestehenden Baugruppen nachgerüstet werden
Die Nutabschnitte können insbesondere an einer niederdruckseitigen Stirnseite des Druckentlastungselements, an einer dem Nutgrund der zweiten Ringnut zuweisenden Außenseite des zweiten Vorspannrings und/oder an einer der Hochdruckseite H zuweisenden Stirnseite des zweiten Dichtrings des Druckentlastungselements angeordnet sein. Wesentlich ist, dass der dichtlippenartige Schenkel des Vorspannelements durch die Nutabschnitte bzw. die Durchgangsbohrungen des Verbindungskanals mit dem im niederdruckseitig angeordneten Zwischenraum herrschenden Druck beaufschlagbar ist, selbst wenn das Druckentlastungselement gegen die niederdruckseitige Nutflanke der zweiten Ringnut gepresst wird. Darüber hinaus muss durch den Verbindungskanal in der Druckentlastungslage ein zur Hochdruckseite gerichteter Fluidstrom des jeweiligen Druckmediums sichergestellt sein, selbst wenn das Druckentlastungselement in der Druckentlastungslage an die hochdruckseitige Nutflanke der zweiten Ringnut gepresst wird.

In einer weiteren bevorzugten Ausführung des erfindungsgemäßen Dichtungssystems ist das äußere Bauteil ein Gehäuse, insbesondere ein Zylinder, und das innere Bauteil eine Kolbenstange eines in dem Gehäuse geführten Kolbens. Es versteht sich, dass die Ringnuten alternativ auch im inneren Bauteil ausgebildet sein können. Gehäuse-Kolben-Einheiten sind oftmals hydraulische Systeme mit hohen Betriebsdrücken. Eine erfindungsgemäße Anordnung und Ausführung von Druckentlastungselementen bietet sich zur Entlastung einer in solchen Systemen unter Hochdruck belasteten Primärdichtung an. Die Dichtungsanordnung kann durch einen in einer weiteren Ringnut angeordneten Abstreifring zur Säuberung der einzufahrenden Kolbenstange vervollständigt werden.

Die Erfindung umfasst weiter die Verwendung eines erfindungsgemäßen Dichtungssystems zur Einstellung einer Zwischenraumdruckkaskade, wobei die hydraulischen Drücke in den Zwischenräumen derart eingestellt werden, dass an jedem zweiten Dichtring die gleiche Druckdifferenz anliegt. Der Vorteil einer derartigen Verwendung des erfindungsgemäßen Dichtungssystems liegt darin, dass alle Druckentlastungselemente in gleichem Maße zur Druckentlastung der unter Hochdruck belasteten Primärdichtung beitragen. Die einzelnen Komponenten einer derartigen gleichstufigen Zwischenraumdruckkaskade werden gleichmäßig beansprucht, wodurch die Lebensdauer des gesamten Dichtungssystems erhöht wird. Das Druckentlastungselement kann derart in der zweiten Ringnut angeordnet sein, dass der Dichtring und der Vorspannring in einer invertierten Drucklage PZN > PZH bzw. PZN > PH zur Hochdruckseite hin verschoben werden. Bei einem weiteren Ansteigen des Druckes wird der Vorspannring, deformiert, bis beim Erreichen der Druckentlastungslage PZN ≥ PZH+Pkrit bzw. PZN ≥ PH+Pkrit der bis dahin noch geschlossene Verbindungskanal freigegeben wird, so dass das Druckmedium durch den Verbindungskanal vom niederdruckseitigen Zwischenraum in den hochdruckseitigen Zwischenraum fließen kann. Die Druckzuwachsgröße Pkrit entspricht der zur Freigabe des Verbindungskanals aufzuwendenden Deformationskraft pro Fläche. Das im niederdruckseitigen Zwischenraum anstehende Druckmedium fließt solange über den Verbindungskanal in den hochdruckseitigen Zwischenraum ab, bis sich eine Drucklage PZN-PZH < Pkrit bzw. PZN- PH < Pkrit einstellt, in der die am Druckentlastungselement anliegende Druckdifferenz PZN-PZH unterhalb der Druckzuwachsgröße Pkrit liegt und der Verbindungskanal durch eine entsprechende Entspannung, Verformung und/oder Verschiebung des Vorspannrings und/oder des Dichtrings wieder verschlossen wird. Nach der Druckentlastung steht in dem niederdruckseitigen Zwischenraum ein Druck PZN ≅ (PZH+Pkrit)- bzw. PZN ≅ (PH+Pkrit)- an, welcher unterhalb des hochdruckseitigen Drucks plus Druckzuwachsgröße liegt.

Weitere Vorteile der Erfindung ergeben sich aus der Beschreibung und den Figuren der Zeichnung. Nachstehend wird die Erfindung anhand eines in der Zeichnung wiedergegebenen Ausführungsbeispiels erläutert.

In der Zeichnung zeigen:
- Fig. 1: ein erfindungsgemäßes Dichtungssystem in einer Grunddrucklage, in einer ausschnittsweisen Schnittdarstellung;
- Fig. 2: das Dichtungssystem gemäß Fig. 1 in einer Druckentlastungslage, in einer ausschnittsweisen Schnittdarstellung.

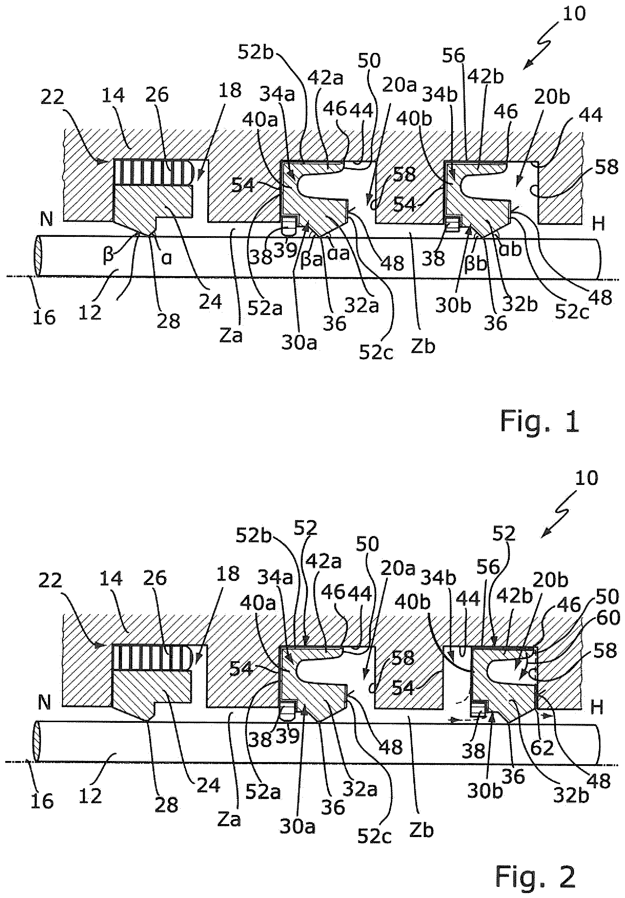

**Figur 1** zeigt ein erfindungsgemäßes Dichtungssystem **10** zwischen zwei gegeneinander beweglichen Bauteilen zum Abdichten einer Hochdruckseite H gegenüber einer Niederdruckseite N.

Ein inneres Bauteil **12** ist in einem äußeren Bauteil **14** derart angeordnet, dass es eine Translationsbewegung axial entlang einer Bewegungsachse **16** durchführen kann. Das äußere Bauteil 14 kann beispielsweise als ein zylinderförmiges Gehäuse und das innere Bauteil 12 als eine Kolbenstange eines in dem Gehäuse geführten Kolbens ausgebildet sein. In Figur 1 ist der obere Halbraum des Dichtungssystems 10 in einem ausschnittsweisen Längsschnitt gezeigt. Das äußere Bauteil 14 weist insgesamt drei zum inneren Bauteil 12 hin offene Ringnuten auf, eine der Niederdruckseite N zugewandte erste Ringnut **18** und zwei auf der Hochdruckseite H angeordnete zweite Ringnuten **20a** und **20b.** In der ersten Ringnut 18 ist eine Dichtungsanordnung **22** vorgesehen. Es versteht sich, dass die Ringnuten auch durch das innere Bauteil ausgebildet sein können.

Die Dichtungsanordnung 22 umfasst einen am inneren Bauteil 12 anliegenden ersten Dichtring **24** aus einem elastisch verformbaren Material und einen den ersten Dichtring 24 radial spannenden, gegenüber der ersten Ringnut 18 abdichtenden ersten Vorspannring **26** aus einem elastisch verformbaren Material. Der erste Vorspannring 26 kann beispielsweise als O-Ring ausgeführt sein. Die Dichtungsanordnung 22 dient als Primärdichtung, weshalb eine Dichtkante **28** des ersten Dichtrings 24 einen steilen Pressungsgradienten aufweist. Der steile Pressungsgradient und die damit einhergehende geringe Leckagerate hängt von einem hochdruckseitigen Kontaktflächenwinkel α und einem niederdruckseitigen Kontaktflächenwinkel β zwischen dem ersten Dichtring 24 und dem inneren Bauteil 12 ab, wobei der hochdruckseitige Kontaktflächenwinkel α den niederdruckseitigen Kontaktflächenwinkel β übersteigt.

In der zweiten Ringnut 20a ist ein erstes Druckentlastungselement **30a,** in der weiteren zweiten Ringnut 20b ein weiteres Druckentlastungselement **30b** angeordnet. Die Druckentlastungselemente 30a und 30b umfassen jeweils einen zweiten Dichtring **32a, 32b** und einen zweiten Vorspannring **34a, 34b.** Die zweiten Dichtringe 32a, 32b werden durch die die zweiten Vorspannringe 34a, 34b in radialer Richtung gegen das innere Bauteil 12 gespannt.

Der zweite Dichtring 32a, 32b und der zweite Vorspannring 34a, 34b beider Druckentlastungselemente 30a, 30b sind jeweils einstückig miteinander ausgebildet und bestehen aus elastisch verformbarem Polyurethan.

Die zweiten Dichtringe 32a, 32b liegen mit ihren Dichtkanten **36** am inneren Bauteil 12 jeweils dichtend an, wobei entsprechende hochdruckseitige Kontaktflächenwinkel αₐ und α_{b} jeweils kleiner als ein entsprechender niederdruckseitiger Kontaktflächenwinkel **βₐ** oder **β_{b}** sind. Der resultierende flache Pressungsgradient kann auch durch symmetrische, das heißt, gleiche Kontaktflächenwinkel an einer Dichtkante 36 erreicht werden. Zusätzlich kann das Schleppverhalten durch ein Abrunden der jeweiligen Dichtkante 36 beeinflusst werden.

Durch die Hintereinanderanordnung der Dichtungsanordnung 22, des ersten Druckentlastungselements 30a und des weiteren Druckentlastungselements 30b sind ein erster Zwischenraum **Zₐ** zwischen der Dichtungsanordnung 22 und dem ersten Druckentlastungselement 30a und ein weiterer Zwischenraum **Z_{b}** zwischen dem ersten Druckentlastungselement 30a und dem weiteren Druckentlastungselement 30b festgelegt.

Die Druckentlastungselemente 30a, 30b sind jeweils mit einem Stützring **38** versehen. Die Stützringe 38 greifen in eine nicht näher bezeichnete Einbuchtung der zweiten Dichtringe 32a, 32b ein und können beispielsweise aus Metall oder einem geeigneten zähelastischen Kunststoff bestehen. Die Stützringe 38 dienen einerseits einer Abstützung der zweiten Dichtringe 32a, 32b in radialer Richtung. Andererseits kann durch die Stützringe 38 bei einer hochdruckseitigen Druckbeaufschlagung der Druckentlastungselemente 30a, 30b eine unerwünschte Extrusion der zweiten Dichtringe 32a, 32b in die Zwischenräume Zₐ bzw. Z_{b} hinein unterbunden bzw. dieser entgegengewirkt werden. Zwecks einer möglichst reibungsarmen Relativbewegung des inneren und des äußeren Bauteils 12, 14 können die beiden Stützringe 38 zum inneren Bauteil 12 jeweils kontaktfrei angeordnet sein. Einer oder mehrere der zweiten Stützringe 38 können eine dem inneren Bauteil 12 zuweisende Innenseite **39** mit flachen Kegelwinkeln bzw. mit einem Radius aufweisen, wie dies in Fig. 1 beim zweiten Stützring 38 des ersten Druckentlastungselements 30a beispielhaft gezeigt ist. Eine solche Ausgestaltung der Innenseite 39 des Stützrings 38 ist insbesondere in dem Fall einer Anlage des Stützrings 38 am inneren Bauteil bezüglich einer reduzierten Reibung einer für den Druckausgleich ggf. erforderlichen Fluidpassage sowie einer erhöhten Standzeit von Vorteil. Der Stützring 38 kann darüber hinaus auch mit einer in der Zeichnung nicht näher wiedergegebenen axialen Durchgangsbohrung (bzw. axialen Nut) für das unter Druck stehende Fluid versehen sein, um eine vollständig ungehinderte (axiale) Passage des Fluids in den Verbindungskanal zu ermöglichen.

Die flachen Pressungsgradienten an den Dichtkanten 36 lassen an den Druckentlastungselementen 30a, 30b jeweils eine (vor-)bestimmte Leckage im druckbeaufschlagten Zustand und bei einer translatorischen Bewegung des inneren Bauteils 12 im äußeren Bauteil 14 zu. Die jeweilige Leckagerate bestimmt den hydraulischen Druck im niederdruckseitig an das jeweilige Druckentlastungselement 30a, 30b angrenzenden Zwischenraum, beim ersten Druckentlastungselement 30a den Druck P_{Za} im ersten Zwischenraum Zₐ, beim weiteren Druckentlastungselement 30b den Druck P_{Zb} im weiteren Zwischenraum Z_{b}. Die Zwischenraumdrücke P_{Za} und P_{Zb} sind derart eingestellt, dass ein stufenartiger Anstieg vom Druck P_{N} auf der Niederdruckseite bis zum Druck P_{H} auf der Hochdruckseite im Dichtungssystem 10 entsteht, P_{N} < P_{Za} < P_{Zb} < P_{H}.

Die Wahl bestimmter Zwischenraumdrücke P_{Za} und P_{Zb} erlaubt das Einstellen einer gleichstufigen Druckkaskade, bei der die Dichtungsanordnung 22 als auch beide Druckentlastungselemente 30a, 30b, insbesondere der erste Dichtring 24 und beide zweiten Dichtringe 32a, 32b, mit der gleichen Druckdifferenz P_{Za} - P_{N} = P_{Zb} - P_{Za} = P_{H} - P_{Zb} belastet sind.

In Fig. 1 ist die Grunddrucklage P_{N} < P_{Za} < P_{Zb} < P_{H} einer Zwischenraumdruckkaskade gezeigt. Die Dichtungsanordnung 22 liegt niederdruckseitig an der ersten Ringnut 18 an und dichtet somit den ersten Zwischenraum Zₐ gegenüber der Niederdruckseite N ab.

Die zweiten Vorspannringe 34a, 34b des ersten und des zweiten Druckentlastungselements 30a, 30b weist jeweils einen im Wesentlichen L-förmigen Querschnitt mit einem ersten Schenkel **40a, 40b** und einen als Dichtlippe ausgebildeten zweiten Schenkel **42a, 42b** auf. Der erste Schenkel 40a, 40b ist am jeweiligen zweiten Dichtring 32a, 32b angeformt und erstreckt sich von dem zweiten Dichtring 32a, 32b radial in Richtung auf den Nutgrund **44** der jeweiligen zweiten Ringnut 20a, 20b. Die zweiten Schenkel 42a, 42b erstrecken sich jeweils axial in Richtung auf die Hochdruckseite H des Dichtungssystems 10. Die zweiten Schenkel 42a, 42b der zweiten Vorspannringe 34a, 34b liegen in der Grunddrucklage mit ihrer Dichtkante **46** jeweils am Nutgrund 44 der zweiten Ringnut 20a, 20b elastisch vorgespannt dichtend an. Zu beachten ist, dass die zweiten Dichtungsringe 32a, 32b mit ihrer der Hochdruckseite H zugewandten Stirnseite **48** jeweils über ein freies Ende **50** des zweiten Schenkels 42a, 42b des jeweiligen zweiten Vorspannrings 34a, 34b axial in Richtung auf die Hochdruckseite H vorragen. Die Druckentlastungselemente 30a, 30b sind vorliegend in den zweiten Ringnuten 20a, 20b mit einem axialem Spiel angeordnet, können aber auch ohne ein derartiges axiales Spiel in den zweiten Ringnuten 20a, 20b angeordnet sein.

Für einen Druckausgleich zwischen dem ersten Zwischenraum Zₐ und dem weiteren Zwischenraum Z_{b} bzw. zwischen dem zweiten Zwischenraum Z_{b} und der Hochdruckseite H dienen Verbindungskanäle **52.** Die Verbindungskanäle umfassen vorliegend jeweils Nutabschnitte **52a, 52b, 52c** in den zweiten Dichtringen 32a, 32b bzw. den zweiten Vorspannringen 34a, 34b der Druckentlastungselemente 30a, 30b.

Die Nutabschnitte 52a sind an einer (gestuft ausgeführten) niederdruckseitigen Stirnseite **54** der Druckentlastungselemente 30a, 30b angeordnet. Die Nutabschnitt 52a können auch teilweise an den jeweiligen Stützringen 38 ausgebildet sein.

Die Nutabschnitte 52b sind an einer dem Nutgrund 44 zuweisenden Außenseite **56** der zweiten Vorspannringe 34a, 34b der Druckentlastungselemente **30a,** 30b angeordnet und verlaufen axial in Richtung auf die dem Nutgrund 44 zugeordnete Dichtkante 46. Die Nutabschnitte 52c sind jeweils an der hochdruckseitigen Stirnseite 48 der zweiten Dichtringe 32a, 32b der Druckentlastungselemente 30a, 30b angeordnet.

Die Nutabschnitte 52c sind niederdruckseitig der Dichtkante 46 des jeweiligen zweiten Vorspannrings 34a, 34b angeordnet. In der gezeigten Grunddrucklage P_{Za} < P_{Zb} liegt das Druckentlastungselement 30a, 30b niederdruckseitig an der jeweiligen zweiten Ringnut 20a, 20b an. Die Nutabschnitte 52a; 52b sind durch die am Nutgrund 44 anliegende Dichtkante 46 der zweiten Vorspannringe 34a, 34b gegenüber dem Nutabschnitt 52c abgedichtet, d.h. die den beiden Druckentlastungselementen **30a,** 30b zugeordneten Verbindungskanäle 52 sind jeweils funktionell fluiddicht verschlossen.

In **Figur 2** ist dargestellt, wie sich die Lage der einzelnen Elemente des in Figur 1 gezeigten erfindungsgemäßen Dichtungssystems 10 bei Eintreten einer Druckentlastungslage P_{Zb} ≥ P_{H}+Pₖᵣᵢₜ ändert.

In dieser Druckentlastungslage ist der Druck P_{Zb} im weiteren Zwischenraum Z_{b} über den Druck P_{H} auf der Hochdruckseite H angestiegen, woraufhin das weitere Druckentlastungselement 30b zur Hochdruckseite H verschoben wurde und folglich mit seiner hochdruckseitigen Stirnseite 48 an einer hochdruckseitigen Flanke **58** der zweiten Ringnut 20b anliegt.

Durch einen weiteren Anstieg des Zwischenraumdruckes P_{Zb} wird der zweite Vorspannring 34b aktiviert und erfährt eine (abschnittsweise) Verformung radial in Richtung auf das innere Bauteil 12, wie dies mit dem Pfeil **60** verdeutlicht ist. Bei dieser Verformung des zweiten Vorspannrings 34b wird die Dichtkante 46 in der Druckentlastungslage P_{Zb} ≥ P_{H}+Pₖᵣᵢₜ aus ihrer dichtenden Anlage am Nutgrund 44 abgehoben und so eine fluidische Verbidung des Zwischenraums Z_{b} über die Nutabschnitte 51a und 52b mit dem Nutabschnitt 52c und mithin mit der der Hochdruckseite H freigegeben. Das im Zwischenraum Z_{b} anstehende Druckmedium strömt entlang der strichliert wiedergegebenen Strömungsrichtung **62** durch den Verbindungskanal 52 und gelangt dadurch auf die Hochdruckseite H. Diese Druckentlastung des weiteren Zwischenraums Z_{b} findet bis zu dem Punkt statt, an dem der niederdruckseitige Überdruck die Druckzuwachsgröße pₖᵣᵢₜ nicht mehr übersteigt, p_{Zb} - p_{H} < pₖᵣᵢₜ, und der zweite Vorspannring 34b sich aufgrund der ihm innewohnenden Eigenelastizität wieder dichtend am Nutgrund 44 anlegt und so den Verbindungskanal 52 fluiddicht verschließt.

Sowohl die Lage der Dichtungsanordnung 22 als auch die Position des ersten Druckentlastungselements 30a bleiben sowohl in der Drucklage P_{Zb} > P_{H} als auch in der Druckentlastungslage P_{Zb} ≥ P_{H}+Pₖᵣᵢₜ unverändert, da weiterhin P_{N} < P_{Za} < P_{Zb} gilt. Die Druckentlastung des weiteren Zwischenraums Z_{b} hat somit keinerlei Auswirkungen auf die Dichtungsanordnung 22, was die Wirksamkeit und Vorteilhaftigkeit einer mehrstufigen Druckkaskade zur Druckentlastung einer Primärdichtung verdeutlicht.

Zu beachten ist, dass der erste Dichtring und der erste Vorspannring der in der ersten Ringnut 18 angeordneten Dichtungsanordnung 22 in einer den Druckentlastungselementen entsprechenden Weise einstückig miteinander ausgebildet und aus Polyurethan bestehen kann.

Es versteht sich, dass die Nutabschnitte 52a, 52b und/oder 52c zumindest teilweise in demjenigen Bauteil 12, 14 angeordnet sein können, das die zweiten Ringnuten 20a, 20b ausbildet. Darüber hinaus kann der Verbindungskanal 52 anstatt eines oder mehrerer der vorstehend erläuterten Nutabschnitte 52a, 52b, 52c auch eine oder mehrere Durchgangsbohrungen der umfassen, die das Druckentlastungselement 30a, 30b durchgreifen.

## Patentansprüche

1. Dichtungssystem (10) zwischen zwei entlang einer Bewegungsachse (16) gegeneinander translatorisch beweglichen Bauteilen (12, 14) zum Abdichten einer Hochdruckseite (H) gegenüber einer Niederdruckseite (N),
wobei ein äußeres Bauteil (14) eine zu einem inneren Bauteil (12) offene, der Niederdruckseite (N) zugewandte erste Ringnut (18) und zwei zum inneren Bauteil (12) offene, der Hochdruckseite (H) zugewandte zweite Ringnuten (20a, 20b) aufweist,
wobei in der ersten Ringnut (18) eine Dichtungsanordnung (22) vorgesehen ist, die einen am inneren Bauteil (12) anliegenden ersten Dichtring (24) aus einem elastisch verformbaren Material und einen den ersten Dichtring (24) radial spannenden, gegenüber der ersten Ringnut (18) abdichtenden ersten Vorspannring (26) aus einem elastisch verformbaren Material aufweist, wobei in jeweils jeder zweiten Ringnut (20a, 20b) ein Druckentlastungselement (30a, 30b) vorgesehen ist, das einen am inneren Bauteil (12) anliegenden zweiten Dichtring (32a, 32b) aus einem elastisch verformbaren Material und einen den zweiten Dichtring (32a, 32b) radial spannenden, gegenüber der zweiten Ringnut (20a, 20b) abdichtenden zweiten Vorspannring (34a, 34b) aus einem elastisch verformbaren Material aufweist,
wobei der zweite Dichtring (32a, 32b) eine Dichtkante (36) mit einem hochdruckseitigen Kontaktflächenwinkel (αₐ, α_{b}) und einem niederdruckseitigen Kontaktflächenwinkel (βₐ, β_{b}) aufweist,
wobei jedem Druckentlastungselement (30a, 30b) mindestens ein Verbindungskanal (52) zugeordnet ist,
über den ein Zwischenraum (Zₐ) zwischen der Dichtungsanordnung (22) und dem ersten Druckentlastungselement (30a) mit der Hochdruckseite (H) oder ein Zwischenraum (Z_{b}) zwischen zwei benachbarten Druckentlastungselementen (30a, 30b) mit der Hochdruckseite (H) verbindbar ist
oder zwei benachbarte Zwischenräume (Zₐ, Z_{b}) über den Verbindungskanal (52) miteinander verbindbar sind,
wobei jeder Verbindungskanal (52) in einer Drucklage P_{ZN} > P_{H} bzw. P_{ZN} > P_{ZH} geschlossen und in einer Druckentlastungslage P_{ZN} ≥ P_{H}+Pₖᵣᵢₜ bzw. P_{ZN} ≥ P_{ZH}+Pₖᵣᵢₜ geöffnet ist,
wobei P_{H} der hydraulische Druck auf der Hochdruckseite (H), P_{ZN} der hydraulische Druck im niederdruckseitigen Zwischenraum, P_{ZH} der hydraulische Druck im hochdruckseitigen Zwischenraum und Pₖᵣᵢₜ eine Druckzuwachsgröße ist, bei der oder bei deren Überschreitung der Verbindungskanal (52) geöffnet ist,
wobei P_{Krit} durch eine Verformung des zweiten Vorspannrings (34a, 34b) definiert ist,
wobei der Verbindungskanal (52), in der Drucklage P_{ZN} > P_{H} bzw. P_{ZN} > P_{ZH} durch den zweiten Vorspannring (34a, 34b) verschlossen ist und
wobei der hochdruckseitige Kontaktflächenwinkel (αₐ, α_{b}) der Dichtkante (36) des zweiten Dichtrings (32a, 32b) kleiner oder gleich dem niederdruckseitigen Kontaktflächenwinkel (βₐ, β_{b}) der Dichtkante (36) ist, so dass im druckbeaufschlagten Zustand und bei einer Hin- und Herbewegung des inneren Bauteils (12) im äußeren Bauteil (14) für den zweiten Dichtring (32a, 32b) eine bestimmte Leckagerate eingestellt ist, über die der hydraulische Druck im niederdruckseitigen Zwischenraum (Zₐ, Z_{b}) eingestellt wird,
**dadurch gekennzeichnet, dass**
der zweite Dichtring (32a, 32b) und der zweite Vorspannring (34a, 34b) der beiden Druckentlastungselemente (30a, 30b) jeweils einstückig miteinander ausgebildet sind und aus Polyurethan bestehen, wobei P_{Krit} durch eine zumindest abschnittsweise Verformung des zweiten Vorspannrings (34a, 34b) in einer zur Bewegungsachse radialen Richtung definiert ist und wobei die Dichtkante (36) des Dichtrings (32a, 32b) eines jeden Druckentlastungselements (30a, 30b) abgerundet ist und wobei der zweite Dichtring (32a, 32b) der beiden Druckentlastungselemente (30a, 30b) jeweils mit einem Stützring versehen sind und wobei der Stützring (38) zumindest eines Druckentlastungselements (30a, 30b) allein an seiner dem inneren Bauteil (12) zuweisenden Innenseite (39) einen Radius aufweist.

2. Dichtungssystem nach Anspruch 1 , **dadurch gekennzeichnet, dass** der erste Dichtring (24) und der erste Vorspannring (26) der Dichtungsanordnung (22) einstückig miteinander ausgebildet sind und aus Polyurethan bestehen.

3. Dichtungssystem nach Anspruch 1 oder 2, **dadurch gekennzeichnet, dass** der zweite Vorspannring (34a, 34b) des Druckentlastungselements (30a, 30b) einen dichtlippenartig ausgeformten Schenkel (40, 42) aufweist, der in der Drucklage P_{ZN} > P_{H} bzw. P_{ZN} > P_{ZH} mit einer Dichtkante 46 am Nutgrund der zweiten Ringnut (20a, 20b) dichtend anliegt und wobei der dichtlippenartig ausgeformte Schenkel (40, 42) in der Druckentlastungslage aus seiner dichtenden Anlage am Nutgrund (44) bewegt ist.

4. Dichtungssystem nach einem der vorhergehenden Ansprüche, **dadurch gekennzeichnet, dass** zumindest einer der Verbindungskanäle (52) eine im Druckentlastungselement angeordnete Durchgangsbohrung und/oder Nutabschnitte (52a, 52b, 52c) umfasst, die am Druckentlastungselement und/oder im äußeren Bauteil (14) ausgebildet und zur zweiten Ringnut (20a, 20b) hin offen sind.

5. Dichtungssystem nach Anspruch 4, **dadurch gekennzeichnet, dass** einer der Nutabschnitte (52a, 52b, 52c) an einer niederdruckseitigen Stirnseite des Druckentlastungselements (30a, 30b) oder an einer dem Nutgrund (44) der zweiten Ringnut (20a, 20b) zuweisenden Außenseite (56) des zweiten Vorspannrings (34a, 34b) oder an einer der Hochdruckseite (H) zuweisenden Stirnseite (48) des zweiten Dichtrings (32a, 32b) des Druckentlastungselements (30a, 30b) angeordnet ist.

6. Dichtungssystem nach einem der vorhergehenden Ansprüche, **dadurch gekennzeichnet, dass** das äußere Bauteil (14) ein Gehäuse, insbesondere ein Zylinder, und das innere Bauteil (12) eine Kolbenstange eines in dem Gehäuse geführten Kolbens ist.

7. Dichtungssystem nach einem der vorhergehenden Ansprüche, **dadurch gekennzeichnet, dass** der zweite Dichtring (32a, 32b) zumindest eines Druckentlastungselements (30a, 30b) mit einem Stützring (38) versehen ist, der bevorzugt eine dem inneren Bauteil (12) zuweisende Innenseite (39) mit flachen Kegelwinkeln bzw. mit einem Radius aufweist.

8. Verwendung eines Dichtungssystems (10) nach einem der vorhergehenden Ansprüche zur Einstellung einer Zwischenraumdruckkaskade, **dadurch gekennzeichnet, dass** die hydraulischen Drücke in den Zwischenräumen (Zₐ, Z_{b}) derart eingestellt werden, dass an jedem zweiten Dichtring (32a, 32b) die gleiche Druckdifferenz anliegt.

## Claims

1. Sealing system (10) between two components (12, 14) which are translationally movable relative to one another along a movement axis (16), which system is intended for sealing off a high-pressure side (H) from a low-pressure side (N), an outer component (14) having a first annular groove (18) which is open to an inner component (12) and faces the low-pressure side (N), and two second annular grooves (20a, 20b) which are open to the inner component (12) and face the high-pressure side (H), a sealing arrangement (22) being provided in the first annular groove (18), which arrangement has a first sealing ring (24) which abuts the inner component (12) and is made of an elastically deformable material, and a first pretensioning ring (26) which radially pretensions the first sealing ring (24), seals off said ring from the first annular groove (18) and is made of an elastically deformable material, a pressure relief element (30a, 30b) being provided in each second annular groove (20a, 20b), which element has a second sealing ring (32a, 32b) which abuts the inner component (12) and is made of an elastically deformable material, and a second pretensioning ring (34a, 34b) which radially pretensions the second sealing ring (32a, 32b), seals off said ring from the second annular groove (20a, 20b) and is made of an elastically deformable material, the second sealing ring (32a, 32b) having a sealing edge (36) which has a contact surface angle (αₐ, α_{b}) on the high-pressure side and a contact surface angle (βₐ, β_{b}) on the low-pressure side, at least one connecting channel (52) being assigned to each pressure relief element (30a, 30b), via which channel
a gap (Zₐ) between the sealing arrangement (22) and the first pressure relief element (30a) can be connected to the high-pressure side (H)
or a gap (Z_{b}) between two adjacent pressure relief elements (30a, 30b) can be connected to the high-pressure side (H)
or two adjacent gaps (Zₐ, Z_{b}) can be connected to one another via the connecting channel (52),
each connecting channel (52) being closed in a pressure condition P_{ZN} > P_{H} or P_{ZN} > P_{ZH} and open in a pressure relief condition P_{ZN} ≥ P_{H} + Pₖᵣᵢₜ or P_{ZN} ≥ P_{ZH}+Pₖᵣᵢₜ, where P_{H} is the hydraulic pressure on the high-pressure side (H), P_{ZN} is the hydraulic pressure in the low-pressure side gap, P_{ZH} is the hydraulic pressure in the high-pressure side gap and Pₖᵣᵢₜ is a pressure increase value at which or in excess of which the connecting channel (52) is opened, Pₖᵣᵢₜ being defined by a deformation of the second pretensioning ring (34a, 34b), the connecting channel (52) in the pressure condition P_{ZN} > P_{H} or P_{ZN} > P_{ZH} being closed by the second pretensioning ring (34a, 34b), and the high-pressure side contact surface angle (αₐ, α_{b}) of the sealing edge (36) of the second sealing ring (32a, 32b) being less than or equal to the low-pressure side contact surface angle (βₐ, β_{b}) of the sealing edge (36) such that, in the pressurized state and during a back and forth movement of the inner component (12) in the outer component (14), a specific leakage rate is set for the second sealing ring (32a, 32b), by means of which rate the hydraulic pressure in the low-pressure side gap (Zₐ, Z_{b}) is set, **characterized in that** the second sealing ring (32a, 32b) and the second pretensioning ring (34a, 34b) of the two pressure relief elements (30a, 30b) are each integrally formed with one another and consist of polyurethane, Pₖᵣᵢₜ being defined in a direction radial to the movement axis by an at least partial deformation of the second pretensioning ring (34a, 34b), and the sealing edge (36) of the sealing ring (32a, 32b) of each pressure relief element (30a, 30b) being rounded, and the second sealing ring (32a, 32b) of the two pressure relief elements (30a, 30b) being provided in each case with a support ring, and the support ring (38) of at least one pressure relief element (30a, 30b) having a radius only on the inner face (39) thereof which faces the inner component (12).

2. Sealing system according to claim 1, **characterized in that** the first sealing ring (24) and the first pretensioning ring (26) of the sealing arrangement (22) are integrally formed with one another and consist of polyurethane.

3. Sealing system according to either claim 1 or claim 2, **characterized in that** the second pretensioning ring (34a, 34b) of the pressure relief element (30a, 30b) has a leg (40, 42) formed in the manner of a sealing lip that sealingly abuts the groove base of the second annular groove (20a, 20b) by means of a sealing edge (46) when in the pressure condition P_{ZN} > P_{H} or P_{ZN} > P_{ZH}, and the leg (40, 42) formed in the manner of a sealing lip being moved from the sealing abutment thereof against the groove base (44) when in the pressure relief condition.

4. Sealing system according to any of the preceding claims, **characterized in that** at least one of the connecting channels (52) comprises a through-hole arranged in the pressure relief element, and/or groove portions (52a, 52b, 52c), which element and/or portions are formed on the pressure relief element and/or in the outer component (14) and are open toward the second annular groove (20a, 20b).

5. Sealing system according to claim 4, **characterized in that** one of the groove portions (52a, 52b, 52c) is arranged on a low-pressure side end face of the pressure relief element (30a, 30b), or on an outer face (56) of the second pretensioning ring (34a, 34b) that faces the groove base (44) of the second annular groove (20a, 20b), or on an end face (48) of the second sealing ring (32a, 32b) of the pressure relief element (30a, 30b), which end face faces the high-pressure side (H).

6. Sealing system according to any of the preceding claims, **characterized in that** the outer component (14) is a housing, in particular a cylinder, and the inner component (12) is a piston rod of a piston guided in the housing.

7. Sealing system according to any of the preceding claims, **characterized in that** the second sealing ring (32a, 32b) of at least one pressure relief element (30a, 30b) is provided with a support ring (38) which preferably has an inner face (39) which faces the inner component (12) and has shallow taper angles or a radius.

8. Use of a sealing system (10) according to any of the preceding claims for setting a gap pressure cascade, **characterized in that** the hydraulic pressures in the gaps (Zₐ, Z_{b}) are set such that the same pressure difference is applied at each second sealing ring (32a, 32b).

## Revendications

1. Système d'étanchéité (10) entre deux composants (12, 14) mobiles en translation l'un par rapport à l'autre le long d'un axe de déplacement (16), destiné à assurer l'étanchéité d'un côté haute pression (H) vis-à-vis d'un côté basse pression (N),
dans lequel un composant extérieur (14) présente une première rainure annulaire (18) ouverte vers un composant intérieur (12) et tournée vers le côté basse pression (N), et deux rainures annulaires (20a, 20b) ouvertes vers le composant intérieur (12) et tournées vers le côté haute pression (H),
dans lequel un ensemble d'étanchéité (22) est prévu dans la première rainure annulaire (18), ensemble qui présente une première bague d'étanchéité (24) constituée d'un matériau élastiquement déformable et appliquée contre le composant intérieur (12), et une première bague de précontrainte (26) constituée d'un matériau élastiquement déformable, serrant radialement la première bague d'étanchéité (24) et assurant l'étanchéité vis-à-vis de la première rainure annulaire (18),
dans lequel un élément de détente (30a, 30b) est prévu dans respectivement chaque deuxième rainure annulaire (20a, 20b), élément qui présente une deuxième bague d'étanchéité (32a, 32b) constituée d'un matériau élastiquement déformable et appliquée contre le composant intérieur (12), et une deuxième bague de précontrainte (34a, 34b) constituée d'un matériau élastiquement déformable, serrant radialement la deuxième bague d'étanchéité (32a, 32b) et assurant l'étanchéité vis-à-vis de la deuxième rainure annulaire (20a, 20b),
dans lequel la deuxième bague d'étanchéité (32a, 32b) présente une arête d'étanchéité (36) avec un angle de faces de contact (αₐ, α_{b}) côté haute pression et un angle de faces de contact (βₐ, β_{b}) côté basse pression,
dans lequel au moins un canal de liaison (52) est associé à chaque élément de détente (30a, 30b),
canal par l'intermédiaire duquel un espace intermédiaire (Zₐ) entre l'ensemble d'étanchéité (22) et le premier élément de détente (30a) peut être relié au côté haute pression (H)
ou un espace intermédiaire (Z_{b}) entre deux éléments de détente voisins (30a, 30b) peut être relié au côté haute pression (H),
ou deux espaces intermédiaires voisins (Zₐ, Z_{b}) peuvent être reliés entre eux via le canal de liaison (52),
dans lequel chaque canal de liaison (52) est fermé dans une situation de pression P_{ZN} > P_{H} ou P_{ZN} > P_{ZH} et ouvert dans une situation de détente P_{ZN} ≥ P_{H} + Pₖᵣᵢₜ ou P_{ZN} ≥ P_{ZH} + Pₖᵣᵢₜ,
dans lequel P_{H} est la pression hydraulique du côté haute pression (H), P_{ZN} la pression hydraulique dans l'espace intermédiaire côté basse pression, P_{ZH} la pression hydraulique dans l'espace intermédiaire côté haute pression, et Pₖᵣᵢₜ une valeur d'augmentation de pression à laquelle ou lors du dépassement de laquelle le canal de liaison (52) est ouvert,
dans lequel Pₖᵣᵢₜ est définie par une déformation de la deuxième bague de précontrainte (34a, 34b),
dans lequel le canal de liaison (52) est fermé par la deuxième bague de précontrainte (34a, 34b) dans la situation de pression P_{ZN} > P_{H} ou P_{ZN} > P_{ZH}, et
dans lequel l'angle de faces de contact (αₐ, α_{b}) côté haute pression de l'arête d'étanchéité (36) de la deuxième bague d'étanchéité (32a, 32b) est inférieur ou égal à l'angle de faces de contact (βₐ, β_{b}) côté basse pression de l'arête d'étanchéité (36), de sorte que, dans l'état sollicité en pression et lors d'un mouvement de va-et-vient du composant intérieur (12) dans le composant extérieur (14), un débit de fuite donné s'établit pour la deuxième bague d'étanchéité (32a, 32b), débit au moyen duquel est réglée la pression hydraulique dans l'espace intermédiaire (Zₐ, Z_{b}) côté basse pression,
**caractérisé en ce que**
la deuxième bague d'étanchéité (32a, 32b) et la deuxième bague de précontrainte (34a, 34b) des deux éléments de détente (30a, 30b) sont respectivement formées d'un seul tenant l'une avec l'autre et sont constituées de polyuréthane, Pₖᵣᵢₜ étant définie par une déformation, au moins dans certaines zones, de la deuxième bague de précontrainte (34a, 34b) dans une direction radiale par rapport à l'axe de déplacement, et l'arête d'étanchéité (36) de la bague d'étanchéité (32a, 32b) de chaque élément de détente (30a, 30b) étant arrondie, et la deuxième bague d'étanchéité (32a, 32b) des deux éléments de détente (30a, 30b) étant respectivement dotée d'une bague d'appui, et la bague d'appui (38) d'au moins un élément de détente (30a, 30b) présentant un rayon seulement sur son côté intérieur (39) tourné vers le composant intérieur (12).

2. Système d'étanchéité selon la revendication 1, **caractérisé en ce que** la première bague d'étanchéité (24) et la première bague de précontrainte (26) de l'ensemble d'étanchéité (22) sont formées d'un seul tenant l'une avec l'autre et sont constituées de polyuréthane.

3. Système d'étanchéité selon la revendication 1 ou 2, **caractérisé en ce que** la deuxième bague de précontrainte (34a, 34b) de l'élément de détente (30a, 30b) comprend une branche (40, 42) formée à la manière d'une lèvre d'étanchéité, laquelle branche s'appuie de manière étanche contre le fond de la deuxième rainure annulaire (20a, 20b) par une arête d'étanchéité (46) dans la situation de pression P_{ZN} > P_{H} ou P_{ZN} > P_{ZH}, et la branche (40, 42) formée à la manière d'une lèvre d'étanchéité étant déplacée hors de son appui étanche contre le fond de rainure (44) dans la situation de détente.

4. Système d'étanchéité selon l'une des revendications précédentes, **caractérisé en ce qu'**au moins l'un des canaux de liaison (52) comporte un alésage traversant disposé dans l'élément de détente et/ou des parties de rainure (52a, 52b, 52c) qui sont formées sur l'élément de détente et/ou dans le composant extérieur (14) et sont ouvertes vers la deuxième rainure annulaire (20a, 20b).

5. Système d'étanchéité selon la revendication 4, **caractérisé en ce que** l'une des parties de rainure (52a, 52b, 52c) est disposée sur un côté frontal, côté basse pression, de l'élément de détente (30a, 30b) ou sur un côté extérieur (56) de la deuxième bague de précontrainte (34a, 34b) tourné vers le fond (44) de la deuxième rainure annulaire (20a, 20b) ou sur un côté frontal (48), tourné vers le côté haute pression (H), de la deuxième bague d'étanchéité (32a, 32b) de l'élément de détente (30a, 30b) .

6. Système d'étanchéité selon l'une des revendications précédentes, **caractérisé en ce que** le composant extérieur (14) est un boîtier, notamment un cylindre, et le composant intérieur (12) est une tige d'un piston guidé dans le boîtier.

7. Système d'étanchéité selon l'une des revendications précédentes, **caractérisé en ce que** la deuxième bague d'étanchéité (32a, 32b) d'au moins un élément de détente (30a, 30b) est dotée d'une bague d'appui (38) qui comprend de préférence un côté intérieur (39) tourné vers le composant intérieur (12), lequel côté intérieur présente des angles de cône plats ou un rayon.

8. Utilisation d'un système d'étanchéité (10) selon l'une des revendications précédentes pour le réglage d'une cascade de pression dans des espaces intermédiaires, **caractérisée en ce que** les pressions hydrauliques dans les espaces intermédiaires (Zₐ, Z_{b}) sont réglées de telle sorte que la même différence de pression est présente au niveau de chaque deuxième bague d'étanchéité (32a, 32b).
